# EUROPÄISCHE PATENTANMELDUNG

(11) **EP 1 669 245 A1**
(43) Veröffentlichungstag der Anmeldung: **14.06.2006**
(21) Anmeldenummer: 04029113.0
(22) Anmeldetag: 08.12.2004
(51) Int. Cl.: B60R 9/04, B62D 25/06, B62D 65/06

(54) **Dachmodul für ein Fahrzeug**

(71) Anmelder: ArvinMeritor GmbH, 63128 Dietzenbach (DE)
(72) Erfinder: Böhm, Horst, 60599 Frankfurt/Main (DE); Grimm, Rainer, 60599 Frankfurt (DE)
(74) Vertreter: Kitzhofer, Thomas

(57) **Zusammenfassung**

Die Erfindung betrifft ein Dachmodul für ein Fahrzeug, mit einer äußeren Dachhaut (12) und mit einer Dachleiste (20), wobei das Dachmodul (10) samt Dachleiste (20) eine vormontierte Einheit ist und die Dachleiste (20) als separates Teil ausgebildet ist.

## Beschreibung

Die Erfindung betrifft ein Dachmodul für ein Fahrzeug.

Bei der herkömmlichen Bauweise eines Daches wird eine Dachplatte aus Metall mit Seitenholmen verschweißt. Die Schweißnaht muß dabei entsprechend groß gewählt werden, um darin Schweißwerkzeuge anzusetzen. Der so entstandene Spalt wird zur Befestigung eines Dachträgers verwendet und mit einer Dachleiste abgedeckt.

Geschäumte Dachmodule dagegen werden mit den Seitenholmen der Fahrzeugkarosserie verklebt, wobei das Dachmodul auf Flanschen der Seitenholme aufliegt und sich ein schmaler Spalt zwischen dem Dachmodul und dem jeweiligen Seitenholm ausbildet. Um an solchen Fahrzeugdächern Lastenträger zu befestigen, werden in dem Spalt zwischen Dachmodul und Seitenholm Lastenträgerbefestigungsvorrichtungen angebracht, die dann wiederum von Dachleisten abgedeckt sein können.

Die Aufgabe der Erfindung besteht darin, ein kostengünstigeres Dachmodul für ein Fahrzeug zu schaffen.

Zu diesem Zweck sieht die Erfindung ein Dachmodul für ein Fahrzeug vor, mit einer äußeren Dachhaut und mit einer Dachleiste, wobei das Dachmodul samt Dachleiste eine vormontierte Einheit mit der Dachleiste als separates Teil ausgebildet ist. Bei dem Dachmodul handelt es sich vorzugsweise um ein durch Hinterschäumen hergestelltes Bauteil mit einer Kunststoffaußenhaut. Die Dachleiste ist als separates Bauteil ausgebildet, wird jedoch an dem Dachmodul befestigt und bildet mit diesem eine vormontierte Einheit. Diese Einheit kann an einen Automobilhersteller geliefert werden, der die Einheit nur noch auf den Seitenholmen des Daches befestigen und nicht mehr - wie früher üblich - die Dachleiste nachträglich anbringen muß. Die in das Dachmodul integrierte Dachleiste ermöglicht so eine einfachere und kostengünstigere Montage des Dachmoduls am Fahrzeug.

Vorzugsweise ist die Dachleiste in Abschnitte unterteilt, wobei wenigstens zwei Abschnitte einen Zugang zu einer Lastenträgerbefestigungsvorrichtung abdecken. Lastenträger sind in den verschiedensten Ausführungen bekannt und transportieren beispielsweise Fahrräder, Ski, Boote oder Containerboxen. Dabei ist eine einfache, sichere und lösbare Befestigung des Lastenträgers am Fahrzeug wünschenswert, die durch die Abschnitte ermöglicht wird, unterhalb derer eine Lastträgerbefestigungsvorrichtung, wie sie z.B. in der EP 1 088 704 A2 gezeigt ist, eingebaut sein kann.

Das Dachmodul weist bevorzugt ein Verstärkungsteil auf, an dem die Dachleiste befestigt ist. Da das Verstärkungsteil Teil des Dachmoduls ist, ist auch die Dachleiste in das Dachmodul integriert.

Vorzugsweise hat das Dachmodul ein plattenförmiges Dachteil, das die äußere Dachhaut definiert, wobei das Verstärkungsteil mit dem plattenförmigen Dachteil verbunden ist. Das plattenförmige Dachteil ist hierbei durch Hinterschäumen hergestellt, und das Verstärkungsteil kann in dem plattenförmigen Dachteil eingeschäumt sein. Dadurch ist ein Herstellen einer Verbindung in einem einzelnen Verfahrenschritt möglich.

Das Verstärkungsteil kann Teil eines Führungsrahmens eines Deckels eines öffnungsfähigen Daches sein. Bei dem öffnungsfähigen Dach handelt es sich insbesondere um ein Spoilerdach, bei dem der Deckel über die Dachhaut verschoben wird.

Die Dachleiste ist bevorzugt über ihre Länge wenigstens abschnittsweise auf das Verstärkungsteil aufgeklipst. In der bevorzugten Ausführungsform ist die Dachleiste sogar über ihre ganze Länge aufgeklipst. Dies gewährleistet eine kostengünstigere Produktion der Dachleiste, da die Dachleiste über die gesamte Länge als gleiches Profilteil ausgebildet ist. Darüber hinaus treten keine optischen Störungen der Dachoberfläche auf.

Die Dachleiste ist z. B. über ihre Länge wenigstens abschnittsweise klappbar. In der bevorzugten Ausführungsform ist die Dachleiste jedoch über ihre ganze Länge klappbar. Dies ermöglicht eine besonders kostengünstige Ausführung der Dachleiste, da sie in allen Bereichen gleich ausgebildet ist. Darüber hinaus wird eine optische Störung der gleichmäßigen Oberfläche des Daches verhindert und eine einfache Montage ermöglicht.

Gemäß einer Ausführungsform ist das Verstärkungsteil zweiteilig ausgeführt und weist ein Zwischenprofil auf, wobei die Dachleiste auf dem Zwischenprofil aufgeklipst ist.

Vorzugsweise ist das Zwischenprofil ein Strangpreßprofil. Strangpreßprofile können kostengünstig hergestellt werden.

Das Verstärkungsteil kann seitlich über einen Seitenrand der äußeren Dachhaut vorstehen.

Gemäß einer Ausführungsform ist ein Verbindungsabschnitt vorgesehen, an dem die Dachleiste befestigt ist, wobei der Verbindungsabschnitt unrund ausgeführt ist und die Dachleiste ein entsprechendes Gegenstück aufweist, das ausreichend elastisch ausgebildet ist, so daß die Dachleiste im hochgeklappten Zustand in der Stellung verharrt. Beim Anbringen der Dachlastenträger können so Abschnitte der Dachleiste hochgeklappt werden, ohne daß zusätzliche Bauteile die hochgeklappte Dachleiste halten müssen. Dies ist kostengünstig.

Der Verbindungsabschnitt hat bevorzugt ein Vieleckprofil. Ein Ausführungsbeispiel zeigt ein quadratisches Profil, das zwei Stellungen der Dachleiste ermöglicht, in denen die Dachleiste gehalten werden kann.

Vorzugsweise ist die Dachleiste ein Strangpreßprofil. Strangpreßprofile sind günstig in der Herstellung.

Weitere Merkmale und Vorteile der Erfindung ergeben sich aus der nachfolgenden Beschreibung und den Zeichnungen. Die Erfindung wird nachfolgend anhand von bevorzugten Ausführungsformen beschrieben. In den Zeichnungen zeigen:
- Figur 1 eine perspektivische Ansicht eines erfindungsgemäßen Dachmoduls eines Fahrzeugs;
- Figur 2 eine Schnittansicht des eingebauten, erfindungsgemäßen Dachmoduls gemäß einer ersten Ausführungsform entlang der Linie II-II in Figur 1; und
- Figur 3 eine Schnittansicht des eingebauten erfindungsgemäßen Dachmoduls gemäß einer zweiten Ausführungsform entlang der Linie II-II in Figur 1.

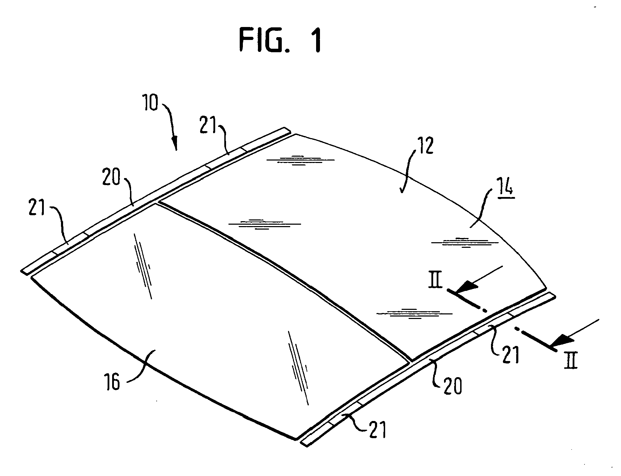

In Figur 1 ist ein Dachmodul 10 für ein Fahrzeug gezeigt. Das Dachmodul 10 hat ein plattenförmiges Dachteil 14, das durch Hinterschäumen hergestellt wird und eine äußere Dachhaut 12 bildet. Das Dachteil 14 könnte aber auch durch ein Glasteil gebildet sein. Geschäumte Fahrzeugteile, insbesondere mit einem glasfaserverstärktem PU-Material, die durch Hinterschäumen oder Hinterspritzen einer durchgefärbten, als Außenhaut des Fahrzeugteils dienenden Kunststoffolie entstehen, sind bekannt. Deswegen wird hier nicht näher darauf eingegangen.

Das Dachmodul 10 ist Teil eines öffnungsfähigen Daches und weist ein feststehendes Dachteil 14 und einen Deckel 16 auf, der durch Verschieben eine Dachöffnung (nicht gezeigt) wahlweise öffnen oder schließen kann.

Beim Dachmodul 10 handelt es sich um ein Spoilerdach, bei dem der Deckel 16 über seitliche, im feststehenden Dachteil 14 integrierte Führungsschienen (nicht gezeigt) über die äußere Dachhaut 12 des feststehenden Dachteils 14 verschoben wird.

Jeweils an den Rändern des Dachmoduls 10 sind Dachleisten 20 angeordnet. Auch wenn im folgenden nur von einer Dachleiste 20 gesprochen wird, wird darauf hingewiesen, daß beide Dachleisten 20 gleich ausgebildet sind.

Die Dachleiste 20 ist in verschiedene Teile unterteilt, die durch ein Strangpreßprofil als separates Bauteil hergestellt werden. Die Dachleiste 20 ist an dem Dachmodul 10 angebracht und bildet mit dem Dachmodul 10 eine vormontierte Einheit bildet, die als Gesamtheit am Fahrzeug montiert wird.

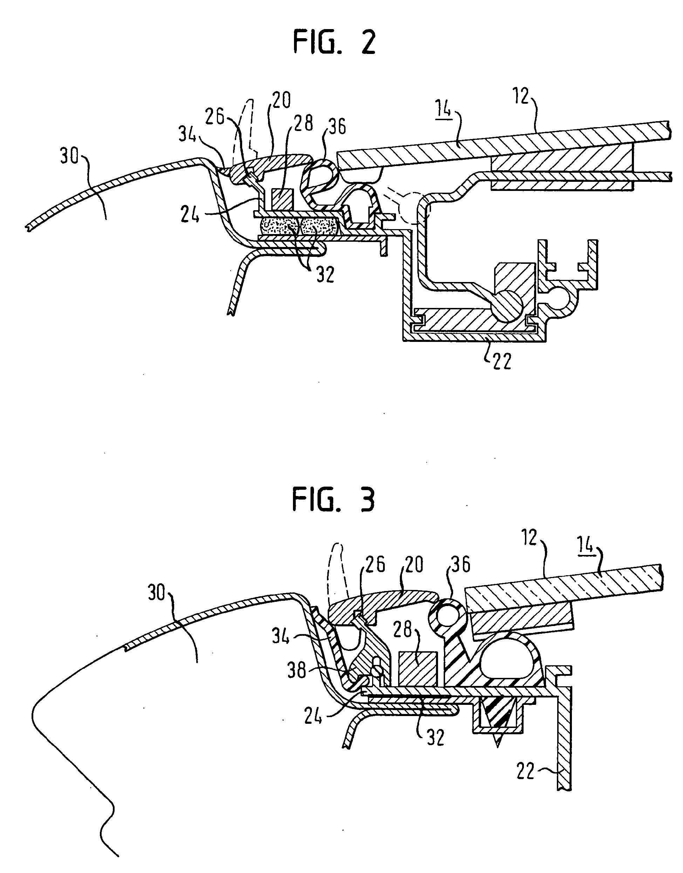

Jede Dachleiste 20 hat zwei Abschnitte 21, die so ausgebildet sind, daß sie einen Zugang zu einer Lastenträgerbefestigungsvorrichtung 28 (schematisch gezeigt in Figuren 2 und 3) abdecken und freigeben können. Eine Lastenträgerbefestigungsvorrichtung wie sie hier verwendet wird, ist in der EP 1 088 704 gezeigt. Deswegen wird hier nicht näher darauf eingegangen.

Die Befestigung der Dachleiste 20 ist in den Figuren 2 und 3 gezeigt.

Das als Spoilerdach ausgebildete Dachmodul 10 weist einen an sich bekannten Führungsrahmen 22 auf. Ein Verstärkungsteil 24 ist Teil des Führungsrahmens 22 und steht seitlich über den Rand der äußeren Dachhaut 12 vor.

An dem Verstärkungsteil 24 ist die Dachleiste 20 befestigt. Die Befestigung erfolgt durch Aufklipsen. Die Dachleiste 20 ist über ihre gesamte Länge auf das Verstärkungsteil 24 aufgeklipst und über ihre gesamte Länge klappbar. Dadurch kann das Verstärkungsteil 24 mit dem Verbindungsabschnitt 26 und die Dachleiste 20 über die gesamte Länge gleich ausgebildet sein und so als kostengünstige, nur unterschiedlich abgelängte Strangpreßprofile hergestellt werden. Zum Aufklipsen weisen das Verstärkungsteil 24 einen Verbindungsabschnitt 26 und die Dachleiste 20 ein entsprechendes Gegenstück mit einer Aufnahme auf. Eine unrunde Formgebung des Verbindungsabschnitt 26 des Verstärkungsteils 24 und des elastischen Gegenstücks der Dachleiste 20 ermöglichen, daß die Dachleiste 20 verschiedene Stellungen einnehmen und in der hochgeklappten Stellung (mit unterbrochenen Linien gezeigt) verharren kann. Das Gegenstück hat ein geschlitztes Lager, um dem Lager die notwendige Elastizität zu geben.

Die Figuren 2 und 3 zeigen den Verbindungsabschnitt 26 und die Öffnung im Gegenstück der Dachleiste 20 als im Querschnitt quadratisch. Durch die quadratische Form des Verbindungsabschnitts 26 sind zwei Stellungen möglich, zwischen denen die Dachleiste 20 geklappt werden kann, wobei die Dachleiste 20 in der hochgeklappten Stellung verharrt. Fig. 2 zeigt gestrichelt die Dachleiste in einer hochgeklappten Stellung.

Die Dachleiste 20 steht nicht über die Umhüllende der äußeren Dachhaut 12 vor, wobei die äußere Dachhaut 12 durch das plattenförmige Dachteil 14 gebildet ist. So kann eine ebene, optisch ansprechende Oberfläche des Dachmoduls 10 erreicht werden.

Das Dachmodul 10 ist auf bekannte Art und Weise mit dem Seitenholm 30 des Daches verbunden. Figur 2 zeigt als Verbindungsmittel 32 zwischen dem Dachmodul 10 und dem Seitenholm 30 eine Kleberaupe. Als Verbindungsmittel 32 könnte jedoch auch eine Schweißnaht oder Verschraubungen gewählt werden.

Eine Dichtung 34 deckt den Spalt zwischen der Dachleiste 20 und dem Seitenholm 30 und eine weitere Dichtung 36 den Spalt zwischen der Dachleiste 20 und dem plattenförmigen Dachteil 14 ab.

Figur 3 zeigt das Dachmodul 10 in einer zweiten Ausführungsform mit einem Dachteil 14 aus Glas. Es wird zur näheren Erläuterung auf die obigen Ausführungen verwiesen. Gleiche Bauteile werden mit gleichen Bezugszeichen versehen.

Die pro Seite fünfteilige Dachleiste 20 ist wiederum über ihre gesamte Länge auf das Verstärkungsteil 24 aufgeklipst und klappbar, wobei das Verstärkungsteil 24 wiederum Teil des Führungsrahmens 22 eines öffnungsfähigen Daches (nicht gezeigt) ist.

Bei dieser Ausführungsform ist das Verstärkungsteil 24 jedoch zweiteilig ausgeführt und weist ein Zwischenprofil 38 auf. Das Zwischenprofil 38 ist an dem unteren Rahmenabschnitt des Verstärkungsteils 24 mittels einer Rastverbindung befestigt.

In dieser Ausführungsform weist das Zwischenprofil 38 den Verbindungsabschnitt 26 auf. Dabei ist der Verbindungsabschnitt 26 wie in der ersten Ausführung ausgebildet, auf die hier verwiesen wird.

Die Dichtung 34, die zwischen dem Seitenholm 30 des Daches und dem Dachmodul 10 angeordnet ist, ist in dieser Ausführungsform zwischen dem Verstärkungsteil 24 und dem Zwischenprofil 38 geklemmt.

Der Spalt zwischen der Dachleiste 20 und dem plattenförmigen Dachteil 14 ist wiederum durch die Dichtung 36 abgedeckt, auf der die Dachleiste 20 aufliegt.

Das Verbindungsmittel 32 des Seitenholms 30 des Daches mit dem Dachmodul 10 und hier insbesondere mit dem Verstärkungsteil 24 ist als Schweißnaht oder Klebung ausführbar.

In beiden Ausfihrungsformen nach Fig. 2 und 3 ist das Verstärkungsteil 24 Teil des Führungsrahmens 22 ist, und die Dachleiste 20 wird auf das Verstärkungsteil 24 bzw. auf das Zwischenprofil 38 aufgeklipst. So ist die Dachleiste 20 in das Dachmodul 10 integriert und kann als vormontierte Einheit weiterverarbeitet bzw. ausgeliefert werden.

Auch das Verstärkungsteil 24 und in der zweiten Ausführungsform das Zwischenprofil 38 sind als Strangpreßprofile ausgeführt und damit kostengünstig herstellbar.

### Bezugszeichenliste

- 10: Dachmodul
- 12: Dachhaut
- 14: Dachteil
- 16: Deckel
- 20: Dachleiste
- 21: Abschnitt
- 22: Führungsrahmen
- 24: Verstärkungsteil
- 26: Verbindungsabschnitt
- 28: Lastenträgerbefestigungsvorrichtung
- 30: Seitenholm
- 32: Verbindungsmittel
- 34: Dichtung
- 36: Dichtung
- 38: Zwischenprofil

## Patentansprüche

1. Dachmodul für ein Fahrzeug, mit einer äußeren Dachhaut (12) und mit einer Dachleiste (20), wobei das Dachmodul (10) samt Dachleiste (20) eine vormontierte Einheit und die Dachleiste (20) als separates Teil ausgebildet ist.

2. Dachmodul für ein Fahrzeug nach Anspruch 1, **dadurch gekennzeichnet, daß** die Dachleiste (20) in Abschnitte unterteilt ist, wobei wenigstens zwei Abschnitte einen Zugang zu einer Lastenträgerbefestigungsvorrichtung (28) wahlweise abdecken.

3. Dachmodul für ein Fahrzeug nach Anspruch 1 oder 2, **dadurch gekennzeichnet, daß** das Dachmodul (10) ein Verstärkungsteil (24) aufweist, an dem die Dachleiste (20) befestigt ist.

4. Dachmodul für ein Fahrzeug nach Anspruch 3, **dadurch gekennzeichnet, daß** das Dachmodul (10) ein plattenförmiges Dachteil (14) hat, das die äußere Dachhaut (12) definiert, und das Verstärkungsteil (24) mit dem plattenförmigen Dachteil (14) verbunden ist.

5. Dachmodul für ein Fahrzeug nach Anspruch 3 oder 4, **dadurch gekennzeichnet, daß** das Verstärkungsteil (24) Teil eines Führungsrahmens (22) eines Deckels (16) eines öffnungsfähigen Daches ist.

6. Dachmodul für ein Fahrzeug nach einem der Ansprüche 3 bis 5, **dadurch gekennzeichnet, daß** die Dachleiste (20) über ihre Länge wenigstens abschnittsweise auf das Verstärkungsteil (24) aufgeklipst ist.

7. Dachmodul für ein Fahrzeug nach einem der Ansprüche 3 bis 6, **dadurch gekennzeichnet, daß** die Dachleiste (20) über ihre Länge wenigstens abschnittsweise klappbar ist.

8. Dachmodul für ein Fahrzeug nach einem der Ansprüche 3 bis 7, **dadurch gekennzeichnet, daß** das Verstärkungsteil (24) zweiteilig ausgeführt ist und ein Zwischenprofil (38) aufweist, wobei die Dachleiste (20) auf dem Zwischenprofil (38) aufgeklipst ist.

9. Dachmodul für ein Fahrzeug nach Anspruch 8, **dadurch gekennzeichnet, daß** das Zwischenprofil (38) ein Strangpreßprofil ist.

10. Dachmodul für ein Fahrzeug nach einem der Ansprüche 3 bis 9, **dadurch gekennzeichnet, daß** das Verstärkungsteil (24) seitlich über einen Rand der äußeren Dachhaut (12) vorsteht.

11. Dachmodul für ein Fahrzeug nach einem der vorhergehenden Ansprüche, **dadurch gekennzeichnet, daß** ein Verbindungsabschnitt (26) vorgesehen ist, an dem die Dachleiste (20) befestigt ist, wobei der Verbindungsabschnitt (26) so unrund ausgefiihrt ist und die Dachleiste (20) ein entsprechendes Gegenstück aufweist, daß die Dachleiste (20) im hochgeklappten Zustand in der Stellung verharrt.

12. Dachmodul für ein Fahrzeug nach Anspruch 11, **dadurch gekennzeichnet, daß** der Verbindungsabschnitt (26) ein Vieleckprofil hat.

13. Dachmodul für ein Fahrzeug nach einem der vorhergehenden Ansprüche, **dadurch gekennzeichnet, daß** die Dachleiste (20) ein Strangpreßprofil ist.
